Europäisches Patentamt

European Patent Office

Office européen des brevets

(19)

(11) **EP 1 038 163 B1**

(12) **EUROPÄISCHE PATENTSCHRIFT**

(45) Veröffentlichungstag und Bekanntmachung des Hinweises auf die Patenterteilung:
**23.04.2003 Patentblatt 2003/17**

(51) Int Cl.⁷: **G01N 1/00**

(21) Anmeldenummer: **98965111.2**

(22) Anmeldetag: **11.12.1998**

(86) Internationale Anmeldenummer:
**PCT/DE98/03652**

(87) Internationale Veröffentlichungsnummer:
**WO 99/030127 (17.06.1999 Gazette 1999/24)**

(54) **VERFAHREN ZUR ÜBERWACHUNG VON BEARBEITUNGSANLAGEN**

PROCESS FOR MONITORING PROCESSING PLANTS

PROCEDE DE CONTROLE D'INSTALLATIONS DE TRAITEMENT

(84) Benannte Vertragsstaaten:
**DE FR GB IT**

(30) Priorität: **11.12.1997 DE 19755133**

(43) Veröffentlichungstag der Anmeldung:
**27.09.2000 Patentblatt 2000/39**

(60) Teilanmeldung:
**02025414.0**

(73) Patentinhaber: **Infineon Technologies AG**
**81669 München (DE)**

(72) Erfinder:
• **FEDERL, Peter**
  **D-93080 Pentling (DE)**
• **PÖPPEL, Gerhard**
  **D-93049 Regensburg (DE)**
• **WACHTMEISTER, Frank**
  **D-93053 Regensburg (DE)**

(74) Vertreter: **Kindermann, Peter**
**Kindermann Patentanwälte**
**Postfach 1330**
**85627 Grasbrunn (DE)**

(56) Entgegenhaltungen:
EP-A- 0 461 793    EP-A- 0 602 932
EP-A- 0 783 170    EP-A- 0 790 574
WO-A- 94/12973     US-A- 5 361 628
US-A- 5 566 092     US-A- 5 657 397
US-A- 5 675 497

• B.SELIGER ET AL: "FAULT DETECTION AND ISOLATION IN TECHNICAL PROCESSES WITH NEURAL NETWORKS" PROCEEDINGS OF THE 34TH CONFERENCE ON DECISION AND CONTROL, Bd. 3, 13. Dezember 1995 (1995-12-13), Seiten 2414-2419, XP002099716 USA
• SWARUP K S ET AL: "FAULT DETECTION AND DIAGNOSIS OF POWER SYSTEMS USING ARTIFICIAL NEURAL NETWORKS" ARTIFICIAL NEURAL NETS AND GENETIC ALGORITHMS PROCEEDINGS OF THE INTERNATIONAL CONFERENCE, INNSBRUCK, AU, 23. Juli 1993 (1993-07-23), Seiten 102-106, XP000539944
• HUDAK M J: "RCE NETWORKS: AN EXPERIMENTAL INVESTIGATION" PROCEEDINGS OF THE INTERNATIONAL JOINT CONFERENCE ON NEURAL NETWORK (IJCNN), SEATTLE, JULY 8 - 12, 1991, 8. Juli 1991 (1991-07-08), Seiten 849-854, XP000238253 INSTITUTE OF ELECTRICAL AND ELECTRONICS ENGINEERS
• N.TSUMURA ET AL: "RELIABLE CLASSIFICATION BY DOUBLE HYPERSPHERES IN PATTERN VECTOR SPACE" ADAPTIVE INTELLIGENT ENERGY SYSTEMS CONFERENCE, Bd. 28, Nr. 10, Oktober 1995 (1995-10), Seiten 1621-1626, XP002099717 UK
• M.POLYCARPOU ET AL: "LEARNING METHODOLOGY FOR FAILURE DETECTION AND ACCOMODATION" IEEE CONTROL SYSTEMS.MAG, Bd. 15, Nr. 3, Juni 1995 (1995-06), Seiten 16-24, XP002099718 USA

**Beschreibung**

Die vorliegende Erfindung betrifft ein Verfahren zur Überwachung bzw. Steuerung von Bearbeitungsanlagen, insbesondere ein Verfahren zur Überwachung bzw. Steuerung von Bearbeitungsanlagen zur Produktion von integrierten Halbleiterprodukten.

Moderne industrielle Produktion ist im allgemeinen durch einen hohen Grad der Automatisierung gekennzeichnet. Insbesondere in der Halbleiterindustrie ist ein hoher Automatisierungsgrad unabdingbar, um international wettbewerbsfähig sein zu können.

Während der Herstellung durchlaufen die Produkte eine Reihe von Bearbeitungsschritten, die automatisiert von unterschiedlichen Bearbeitungsanlagen an dem zu bearbeitenden Produkt vorgenommen werden. Beispielsweise durchläuft bei der Produktion eines integrierten Halbleiterprodukts das Produkt bis zu 600 Prozeßschritte, die zu einem großen Teil nur mit hoch spezialisierten Bearbeitungsanlagen in einer Reinraumumgebung durchgeführt werden können. Dabei sind häufig mehrere gleichartige Bearbeitungsanlagen zu einem Bearbeitungsbereich ("Bay") zusammengefaßt.

Die Kosten für eine derartige automatisierte Produktion werden zu einem großen Teil von der Frage beeinflußt, wie gut und effizient der Herstellungsprozeß überwacht bzw. gesteuert werden kann, so daß das Verhältnis der fehlerfreien Produkte zu der Gesamtzahl der hergestellten Produkte (= Ausbeute) einen möglichst großen Wert annimmt.

Leider unterliegen die einzelnen Bearbeitungsschritte Schwankungen und Unregelmäßigkeiten, die im ungünstigsten Fall beispielsweise den Defekt mehrerer Chips bzw. des ganzen Wafers oder den Ausfall einer Bearbeitungsanlage bedeuten können. Daher muß jeder einzelne Bearbeitungsschritt möglichst stabil durchgeführt werden, um nach der vollständigen Prozessierung eines Wafers eine akzeptable Ausbeute zu gewährleisten.

Im Stand der Technik stehen umfangreiche Methoden zur Verfügung, um evtl. vorhandene Fehler auf einem Wafer zu lokalisieren und diese Fehler bestimmten Bearbeitungsschritten zu zuordnen. Ein Teil dieser Methoden verwendet jedoch Daten, die erst der kompletten Bearbeitung eines Wafers gewonnen werden. Eine Fehlerrückverfolgung ist daher oft nur mit einem sehr hohen Aufwand möglich.

So werden beispielsweise nach der Fertigstellung eines Wafers im Scheibenprüffeld verschiedene elektrische und funktionale Parameter wie z.B. Stromergiebigkeiten, Einsatzspannungen von Transistoren, Stand-by-Ströme, usw. unter verschiedenen Timingbedingungen gemessen und anschließend von den Ingenieuren der Produktionstechnik ausgewertet. Die Fehlerauswertung gestaltet sich als äußerst kompliziert, da im nachhinein festgestellt werden muß, welche Bearbeitungsschritte fehlerhaft durchgeführt wurden.

Die Durchlaufzeit eines Wafers durch eine Produktionslinie kann bis zu 8 Wochen betragen. Tritt beispielsweise bereits nach 2 Wochen Bearbeitungszeit ein schwerwiegender Fehler auf, so kann dieser Fehler möglicherweise erst nach weiteren 6 Wochen Prozessierung erkannt werden. Zum einen wird die Fertigungslinie somit unnötigerweise mit Ausschuß belastet, zum anderen werden durch die Zeitverzögerung viele weitere fehlerhafte Wafer produziert bis die Ursache des Fehlers behoben werden kann.

Um dieses Problem zu mindern, gibt es zusätzlich Kontrollinstrumente, welche Daten, die während oder nach einem Produktionsschritt bzw. mehrerer Produktionsschritte erfaßt werden, analysieren.

So werden beispielsweise nach bestimmten Bearbeitungsschritten Wafer dem Produktionsprozeß entnommen und optisch mit einem Rasterelektronenmikroskop (REM) analysiert. Leider sind diese Methoden sehr zeit- und personalaufwendig und erfolgen daher nur stichprobenhaft.

Bei dem Verfahren "Univariate Statistische Prozeßkontrolle (SPC)" werden nach einer logisch zusammenhängenden Folge von Prozeßschritten (z.B. Belacken, Belichten und anschließendem "Ätzen) die Prozeßergebnisse (z.B. Linienbreiten oder Schichtdikken an 2 Wafer eines Loses) kontrolliert. Treten Abweichungen vom Sollwert auf, werden Maßnahmen zur Beseitigung der Fehlerursachen ergriffen. Dabei ergibt sich jedoch die Schwierigkeit, festzustellen, an welcher der in Frage kommenden Bearbeitungsschritte die Ursache der Abweichungen zu finden ist.

Bei dem Verfahren "Univariate Statistische Equipmentkontrolle (SEC)" werden bei jedem Prozeßschritt über die sog. Equipmentkopplung Meßdaten wie z.B. Prozeßtemperatur, Spannung, Leistung, Gasfluß und Druck, erfaßt und in Kontrollkarten eingetragen. Diese Kontrollkarten werden an einigen Bearbeitungsschritten daraufhin überprüft, ob sich der erfaßte Parameter innerhalb des Bereiches einer oberen Kontrollinie (OKL) und einer unteren Kontrollinie (UKL) befindet. Befinden sich die Meßwerte zwischen UKL und OKL, so gilt der aktuelle Prozeß als normal. Da es wegen des hohen Aufwands jedoch nicht möglich ist, alle Parameterkurven für alle Anlagen manuell zu untersuchen, beschränkt man sich auf den wichtigsten Parameter. Aber selbst wenn man sich auf die wichtigsten Parameter beschränkt, kann dieses vorrangig optische Kontrollmethode maximal auf einen 3-dimensionalen Parametersatz angewandt werden. Schon bei einem 2-dimensionalen Parametersatz wird das Verfahren sehr unübersichtlich. So kann beispielsweise die Kombination zweier normaler Parameter anormal sein, d.h. eventuell zu einem Chip- oder Anlagendefekt führen. Derartige multidimensionalen Kombinationseffekte können mit den konventionellen Methoden nicht aufgelöst werden. Die Pflege und Analyse der Kontrollkarten sind außerdem sehr zeitaufwendig.

Das Veröffentlichung "Fault Detection and Isolation in Technical Processes with Neural Networks" von B. Köppen-Seliger et al. erschienen in Proceedings of the 34th Conference on Decision & Control New Orleans, LA Dezember 1995 beschreibt ein Konzept zur Erkennung und Isolierung von Fehlern in technischen Prozessen, das auf der Verwendung eines RCE-Netzes ("Restricted Coulomb Energy Neural Network") beruht. Weiterhin offenbart das Dokument US 5,361,628 (Kenneth A. Marko et al.) ein Verfahren zur Auswertung von Motorentest mit Hilfe von neuronalen Netzwerken. Die genannten Verfahren benötigen jedoch geeignet kontrollierte Vorversuche, um die verwendeten neuronalen Netze entsprechend trainieren zu können. Entsprechende Vorversuche mit "guten" Bearbeitungsanlagen unter stabilen Bedingungen erfordern jedoch einen sehr hohen Aufwand, der in einer Produktionsumgebung in der Regel nicht erbracht werden kann.

Es ist daher die Aufgabe der vorliegenden Erfindung, ein Verfahren zur Überwachung und/oder Steuerung von Bearbeitungsanlagen bereitzustellen, das die genannten Nachteile der herkömmlichen Verfahren vermeidet oder mindert.

Diese Aufgabe wird von dem Verfahren zur Überwachung und/oder Steuerung von Bearbeitungsanlagen gemäß Patentanspruch 1 gelöst. Weitere vorteilhafte Ausführungsformen, Ausgestaltungen und Aspekte der vorliegenden Erfindung ergeben sich aus den Unteransprüchen der Beschreibung und den beiliegenden Zeichnungen.

Erfindungsgemäß wird ein Verfahren zur Überwachung und/oder Steuerung von Bearbeitungsanlagen, welche zeitabhängige Bearbeitungsparameter aufweisen, bereitgestellt. Das erfindungsgemäße Verfahren umfaßt die Schritte:

a) gewünschte zeitabhängige Bearbeitungsparameter werden als Meßkurve gemessen,

b) aus den gemessenen Bearbeitungsparametern werden zeitunabhängige Maßzahlen erzeugt, und

c) die zeitunabhängigen Maßzahlen werden in einen Klassifikator eingegeben, der zwischen normalen Zuständen der Bearbeitungsanlage und anormalen Zuständen der Bearbeitungsanlage unterscheidet.

Das erfindungsgemäße Verfahren ist dadurch gekennzeichnet, daß der Klassifikator mit Trainingsvektoren, deren Komponenten zeitunabhängige Maßzahlen sind, trainiert wird und zur Vorbereitung des Trainings des Klassifikators aus den vorhandenen Trainingsvektoren diejenigen herausgefiltert werden, die als "anormal" angesehen werden, wobei zur Filterung der anormalen Trainingsvektoren die Distanz von jedem Trainingsvektor zu jedem anderen Trainingsvektor mittels eines geeignet gewählten Distanzmaßes ermittelt wird.

Das erfindungsgemäße Verfahren besitzt den Vorteil, daß die Analyse der Daten vollkommen automatisch erfolgt. Eine zeitund damit kostenintensive "manuelle" Überwachung von Bearbeitungsanlagen kann vermieden werden. Alle gewünschten Parameter können gleichzeitig und parallel, sofort nach der Beendigung eines Bearbeitungsschritts, verarbeitet werden. Eine Zeitverzögerung zwischen dem Auftreten eines Fehlers und dessen Erkennung, wie dies bei einer herkömmlichen Überwachung der Bearbeitungsanlagen üblich ist, wird verhindert.

Weiterhin ist es durch das erfindungsgemäße Verfahren möglich, auch multidimensionale Kombinationseffekte problemlos zu erkennen. Es können sogar solche Parameterkombinationen erkannt werden, die zwar Auswirkungen auf die Funktionsweise einer Anlage haben, obwohl bei dem hergestellten Produkt noch keine Auffälligkeiten zu lokalisieren sind. Darüber hinaus besitzt des erfindungsgemäße Verfahren den Vorteil, daß zur Vorbereitung des Trainings des Neuronalen Netzes die vorliegenden Trainingsvektoren genau analysiert werden. Aus allen vorhandenen Trainingsvektoren werden diejenigen herausgefiltert und vom Training ausgeschlossen, die als "anormal" angesehen werden müssen.

Bevorzugt wird als Klassifikator ein Neuronales Netz verwendet. Ein derartiges Neuronales Netz kann als Hardware-Lösung oder als Software-Lösung verwendet werden.

Insbesondere ist es bevorzugt, wenn ein RCE-Netz verwendet wird. Dabei steht RCE für Restricted Coulomb Energy. Das RCE-Netz hat die Aufgabe, den erlaubten Parameterbereich einzugrenzen und verschiedene Merkmalsklassen voneinander zu separieren und beim sogenannten "Recall" die Testvektoren zu klassifizieren. Zur Separation werden bevorzugt n-dimensionale Hypersphären oder Hyperquader verwendet.

Ein RCE-Netz besitzt den Vorteil, daß der Merkmalsraum in komplexe Teilbereiche, die nicht notwendigerweise zusammenhängend sein müssen, eingeteilt wird. Viele andere Netzwerktypen separieren den Merkmalsraum durch Hyperebenen. Dies hat den Nachteil, daß nur Probleme bearbeitet werden können, die eine durch Ebenenschnitte beschreibbare Klasseneinteilung besitzen. Das RCE-Netz erlaubt eine fast beliebige Separation des Merkmalsraums. Weiterhin wird bei einem RCE-Netz die Anzahl der Zwischenschichtneuronen während des Trainings festgelegt, muß also nicht von Anfang an bekannt sein. Darüber hinaus müssen bei einem RCE-Netz die Gewichtsvektoren nicht, wie bei anderen Netzen, mit Werten vorbelegt werden. Beim RCE-Netz gibt es kein "Ubertraining" wie bei den meisten mit dem Backpropagation-Algorithmus traininerten Netzen. Bei Backpropagation-Netzen ist die Anzahl der lernbaren Muster durch die Neuronenanzahl beschränkt. Wird über die maximal mögliche Musteranzahl hinaus trainiert, werden zuvor gelernte Muster wieder "vergessen". Darüber hinaus können bei einem RCE-Netz zu einem bereits trainiertem Netz neue Klassen hinzugefügt werden, ohne das Netz komplett neu trainieren zu müssen.

Entscheidend für den erfolgreichen Einsatz eines Klassifikators ist die Auswahl der Lerndaten. In der Regel gelten Parameterwerte, die häufig auftreten, als typisch oder normal. Während des Trainings eines Klassifikators können auch Parameterwerte auftreten, die untypisch sind oder die als anormal angesehen werden sollen. Leider war es bisher nicht leicht, derartige anormalen Parameterwerte zu identifizieren.

Daher wird erfindungsgemäß ein Verfahren zur Filterung von Vektoren, die anormal angesehen werden, aus einer Menge von Vektoren bereitgestellt. Das erfindungsgemäß Verfahren ist dadurch gekennzeichnet, daß die Distanz von jedem Vektor zu jedem anderen Vektor mittels eines geeignet gewählten Distanzmaßes ermittelt wird und diejenigen Vektoren herausgefiltert werden, bei denen der Distanzwert K der geordneten Folge der Distanzen, bei dem ein vorgegebener Prozentsatz aller Vektoren kleinere Distanzen zu dem gerade vorliegenden Vektor aufweisen, einen vorgegebenen Schwellwert übersteigt.

Dieses Verfahren besitzt den Vorteil, daß es nicht im Bezug auf die Anzahl der Vektoren und der Dimensionen der Vektoren beschränkt ist.

Weitere vorteilhafte Ausführungsformen, Ausgestaltungen und Aspekte dieses Verfahrens ergeben sich aus den Unteransprüchen.

Die Erfindung wird nachfolgend anhand von Figuren der Zeichnung näher dargestellt. Es zeigen:

Fig. 1 eine schematische Darstellung eines RCE-Netzes,

Fig. 2 eine schematische Darstellung eines zweidimensionalen Maßzahlenraums, und

Fig. 3a und 3b Distanzplots für einen normalen Zustand (Fig. 3a) und einen anormalen Zustand (Fig. 3b).

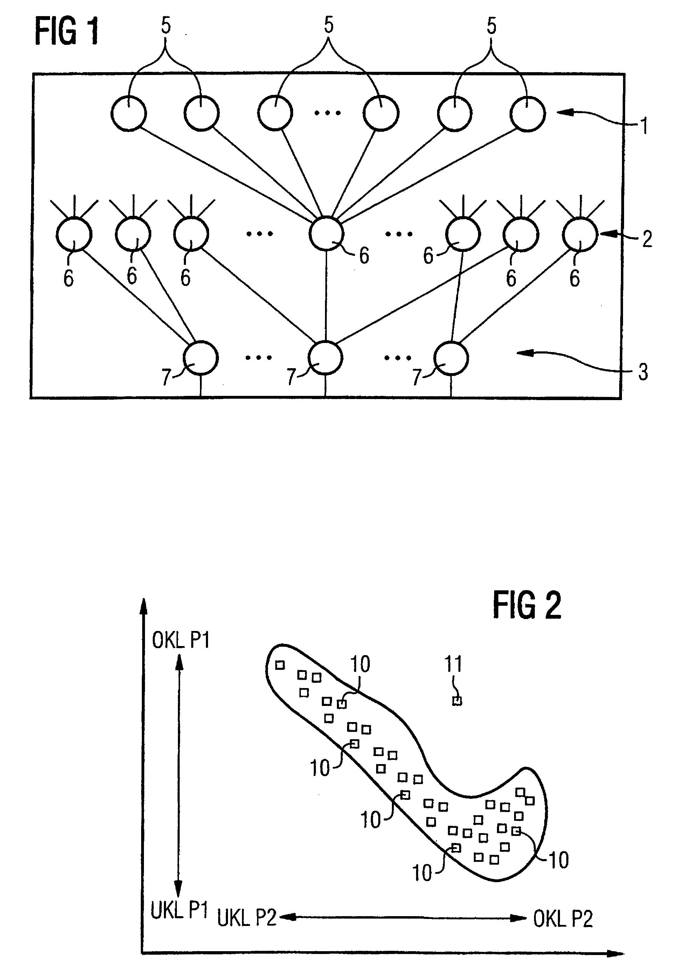

Fig. 1 zeigt eine schematische Darstellung eines RCE-Netzes. Die Verwendung des RCE-Netzes gliedert sich in zwei Phasen: In der "Trainingsphase" werden dem Netz Beispielvektoren präsentiert, anhand derer der Merkmalsraum in verschiedene Klassen eingeteilt wird. Die Klassen der Beispielvektoren müssen beim Training bekannt sein, es handelt sich also um überwachtes Lernen ("supervised learning").

In der "Recallphase" werden dem Netz Testvektoren zur Klassifikation vorgelegt, und entschieden, ob der Testvektor zu einer (oder evtl. zu mehreren) zuvor trainierte Klassen zugeordnet werden kann, oder außerhalb des durch die Klassen beschriebenen Phasenraums liegt. Neuronale Netze sind in gewissen Grenzen in der Lage, von den bekannten Beispielen (zumindest lokal) zu abstrahieren, und auch nichttrainierte Daten im Rahmen einer vorgegeben Toleranz richtig zuzuordnen.

Ein RCE-Netz weist im Allgemeinen drei Schichten auf: eine Eingabeschicht 1 (input layer), eine Zwischenschicht 2 (hidden layer) und eine Ausgabeschicht 3 (output layer).

Jedes Neuron 5 in der Eingabeschicht 1 stellt eine Dimension des n-dimensionalen Inputvektors dar. Die Eingabeschicht 1 ist über "Kopplungsvektoren" (=Gewichtsvektoren) mit jedem Neuron 6 der Zwischenschicht 2 verbunden. Alle Neuronen 6 der Zwischenschicht 2 sind mit genau einem Neuron 7 der Ausgabeschicht 3, die die Merkmalsklassen darstellen, verbunden.

Beim Training des Netzes werden die Gewichtsvektoren und die Anzahl der Neuronen 6 in der Zwischenschicht 2 dynamisch bestimmt, müssen also nicht a priori bekannt sein. Als Propagierungsfunktion wird beim Training, wie auch beim Recall, ein Distanzmaß, z.B. die euklidische Distanz oder ein Skalarprodukt, zwischen dem Testvektor und allen Gewichtsvektoren berechnet. Weicht der Testvektor um weniger als eine vorgegebene Größe von den Gewichtsvektoren ab, "feuert das entsprechende Neuron 6 der Zwischenschicht 2 und aktiviert das entsprechende Ausgabeneuron 7. Die Aktivierungen der Zwischenschicht 2 werden dabei, im Gegensatz zu einem klassischen Perzeptron, über eine logische Oder-Funktion miteinander verknüpft. Die Anzahl der Zwischenschichtneuronen 6 wird während des Trainings ermittelt. Werden mehrere Neuronen 6 in der Zwischenschicht aktiviert, ist die Klassifikation u.U. nicht eindeutig. Das "Gedächtnis" des Netzes ist in den Gewichtsvektoren, auch Prototypen genannt, gespeichert.

Wird als Distanzmaß bei der Bewertung des Inputvektors das Skalarprodukt mit den Gewichtsvektoren verwendet und erfolgt die Bewertung der von der Zwischenschicht an die Ausgabeschicht übermittelten Aktivierungen ebenfalls durch ein Skalarprodukt, so handelt es sich beim RCE-Netz um ein klassisches Mehrschichten-Perzeptron. Um einen Prototypen wird ein Einflußgebiet, eine Hypersphäre mit vorgegebenen Radius gebildet.

Benutzt man als Distanzmaß die Funktion:

$$d = \max_i \left| w_i^j - y_i \right| < \lambda_j,$$

so erhält man Hyperquader mit den Kantenlängen $\lambda_j$ als Einflußgebiete. Das so definierte Netz stellt jedoch kein klassisches Mehrschichten-Perzeptron mehr dar, sondern kann als "verallgemeinertes" Perzeptron bezeichnet werden.

Anschaulich betrachtet wird beim Training um einen Trainingsvektor ein Einflußgebiet, Domäne genannt, ein Hyperquader bzw. Hypershäre mit dem Radius $\lambda_j$ festgelegt. Für weitere Trainingsvektoren (Prototyp) wird getestet, ob sich der Vektor im Einflußgebiet der bisher vorhanden Prototypen befindet, also innerhalb des Hyperquaders bzw. Hypershäre mit Radius $\lambda_j$, liegt. Ist dies nicht der Fall, wird ein neuer Prototyp erzeugt und dadurch die Neuronenanzahl der Zwischenschicht erhöht.

Um eine Fehlklassifikation zu vermeiden, werden in der Trainingsphase die entsprechenden Kanten des Hyperquaders bzw. der Radius der Hypershäre des neu erzeugten Prototyps zurückgezogen und so an die bereits vorhandenen Domänen angepaßt, daß sich diese nicht mehr überlappen. Beim Domänenrückzug wird die neue Kantenlänge bzw. Radius volumenmaximal berechnet.

Bei der Verwendung von Hyperquadern anstatt von Hypersphären wird der Phasenraum dichter bedeckt, da sich bei Überlagerung von Hypersphären Zwischenräume ergeben. Es sind daher bei einem Hyperquaderklassifikator weniger Trainingsbeispiele nötig, um den Merkmalsraum abzudecken.

Zur Überwachung bzw. Steuerung der Bearbeitungsanlagen ist es bevorzugt, wenn das verwendete RCE-Netz einen auf das Intervall [-1, 1] normierten Vektor als Eingabe erhält. Die Komponenten dieses Vektors entstehen aus den aufbereiteten Rohdaten dadurch, daß aus zeitabhängigen Meßgrößen der gewünschten Prozeßparameter (Druck, Temperatur, Gasfluß, usw.) zeitunabhängige charakteristische Maßzahlen gebildet werden. Üblicherweise besitzen die Meßgrößen, je nach Einstellung an der Bearbeitungsanlage, einen unterschiedlichen Wertebereich. Daher ist es bevorzugt, wenn die einzelnen Meßgrößen normiert werden. Als Normierungsbereich der Meßgrößen ist das Intervall [0, 1] bevorzugt.

Die direkte Verarbeitung der normierten Meßgrößen mit einem RCE-Netz führt jedoch noch nicht zu brauchbaren Ergebnissen. Daher müssen die zeitabhängigen Meßgrößen in zeitunabhängige Maßzahlen transformiert werden. Diese Maßzahlen erfüllen bevorzugt folgende Forderungen:

"Universalität": für jeden Parameter soll der gleiche Algorithmus anwendbar sein,

"Ahnlichkeitstreue": ähnliche Kurven liefern ähnliche Maßzahlen,

"Robustheit": kleine Abweichungen in den Kurven verändern die Maßzahl nur wenig,

"Normierung": die Maßzahlen sollen auf das Intervall [-1;1] normiert sein.

Es gibt eine Reihe von mathematischen Verfahren, die es gestatten, die zeitabhängigen Meßgrößen in zeitunabhängige Maßzahlen unter Beachtung der genannten Forderungen zu transformieren.

So kann die zeitabhängige Meßkurve eines gewünschten Parameters durch Polynome approximiert werden. Dabei wird die Meßkurve durch eine Linearkombination von vorgegebenen Basisfunktionen dargestellt. Die Koeffizenten $c_i$ der Linearkombination, die sich beispielsweise bei minimaler gewichteter Fehlerquadratsumme ergeben, sind als Maßzahlen und somit als Komponenten des Inputvektors für das RCE-Netz geeignet.

Um Rechenzeit zu sparen, ist es dabei bevorzugt, wenn als Basisfunktionen orthogonale Polynome, z.B. Tschebyscheff-Polynome, verwendet werden. Die Verwendung von Orthogonalpolynomen hat noch den weiteren Vorteil, daß nur die Koeffizienten der neuhinzugekommenen Polynome berechnet werden müssen, sollten zusätzlich zu den bereits berechneten Koeffizienten höhere Potenzen der Orthogonalpolynome verwendet werden.

Die Verwendung von Abstandsmaßen ist eine weitere Methode, um die zeitabhängigen Meßgrößen in zeitunabhängige Maßzahlen unter Beachtung der genannten Forderungen zu transformieren.

Dazu wird eine Meßkurve diskretisiert, indem Meßwerte zu bestimmten vorgegebenen Zeiten als Komponenten eines Vektors x interpretiert werden. Ist ein Vergleichsvektor y, z.B. ein Polynom an ebenfalls vorgegebenen Stellen, gegeben, so können verschiedene Distanzmaßmethoden verwenden werden, um Ähnlichkeiten zwischen diesen Vektoren festzustellen.

Viele Distanzmaße sind Spezialfälle der sogenannten Minkowski-q-Metriken (auch $L_q$ - Metrik genannt). Allgemein ist eine Minkowski-q-Metrik definiert als

$$d_q\,(x\,,y) = (\Sigma_i^{\,m}\,\left|x^i - y^i\right|^q)^{1/q}$$

Jede dieser Metriken eignet sich zur Kurvencharakterisierung. Berechnet man die $d_q$-Distanz mit einem festem q vom Testvektor x zu einer Referenz y, so erhält man ein Maß für den Abstand der beiden Vektoren. Mißt man die Distanzen zu mehreren, wohldefinierten Vergleichskurven, so lassen sich die Parameterkurven mit wählbarer Genauigkeit charakterisieren. Die $d_q$-Distanzen zu den verschiedenen Vergleichskurven sind als Maßzahlen und somit als Komponenten des Inputvektors für das RCE-Netz geeignet.

Als Vergleichskurven y werden beispielsweise auf das Intervall [0;1] transformierte Tschebyscheff-Polynome eingesetzt. Neben stetigen Vergleichskurven können auch beliebige zusammengesetzte Funktionen eingesetzt werden, falls dies aufgrund der Beschaffenheit der gemessenen Parametern nötig sein sollte.

Ein ähnliches Verfahren erhält man, wenn aus allen zur Verfügung stehenden normierten Meßkurven für jeden gewünschten Parameter eine "mittlere" Meßkurve berechnet wird. Als Maßzahlen können dann verschiedene Abweichungen, beispielsweise die minimale quadratische Abweichung zur mittleren Meßkurve oder eine beliebige andere Minkowski-q-Metrik verwendet werden.

Zur Berechnung der mittleren Meßkurve (Referenzkurve) ist es bevorzugt den Median zu verwenden, da der Median robuster als der Mittelwert ist und damit die Referenzkurve glatter wird.

Ein weiteres Verfahren erhält man, wenn Methoden zur Charakterisierung von Bitmaps zur Beschreibung der vorhandenen Parameterkurven verwendet werden. Derartige Methoden sind in der Druckschrift EP 0 783 170 beschrieben, auf deren Inhalt hiermit Bezug genommen wird. Dabei wird der zeitliche Verlauf eines Parameters als Bitmap betrachtet. Aus den normierten Meßkurven lassen sich z.B. folgende Maßzahlen berechnen:

"Percentage Over Mean": Der Prozentsatz der Werte, die über dem Mittelwert der gesamten betrachteten Meßkurve liegen,

"Deviation of Mass": Abweichung der Werte vom Massenschwerpunkt,

"Mass Distribution": Massenverteilung,

"Fluctuations": stellt ein Maß für die Abweichung benachbarter Werte dar,

"Monotony": globale Monotonie der Meßkurve, und

"Area": Fläche, die die Kurve mit der Zeit-Achse einschließt.

Durch die sechs oben aufgeführten Maßzahlen kann jede der Kurven aussagekräftig beschrieben werden. Der Inputvektor für das Neuronale Netz enthält somit für jeden gewünschten Parameter 6 Maßzahlen.

Als Verfahren zur Kurvencharakterisierung eignet sich auch folgende Methode: die beiden Achsen der Meßkurve werden in beispielsweise 3 "äquidistante" Abschnitte unterteilt. In den 9 auf diese Weise entstandenen Abschnitten wird der Mittelwert und/oder die Standardabweichung der normierten Meßwerte berechnet. Auf diese Weise werden 9 bzw. 18 Maßzahlen für den Inputvektor erzeugt.

Fig. 2 zeigt eine schematische Darstellung eines zweidimensionalen Maßzahlenraums, der durch die genannten Maßzahlen aufgespannt wird. Die Kästchen 10 stehen dabei für Maßzahlvektoren, die normale Zustände einer Bearbeitungsanlage beschreiben. Diese Vektoren spannen ein Gebiet auf, in dem die Bearbeitungsanlage normal und stabil arbeitet. Das Kästchen 11 steht für einen Maßzahlvektor, der einen anormalen Zustand beschreibt, bei dem die Bearbeitungsanlage fehlerhaft arbeitet. Man erkennt, daß dieser anormale Zustand bei einem Verfahren "Univariate Statistische Equipmentkontrolle (SEC)" nicht als anormal erkannt worden wäre, der Maßzahlvektor sowohl bezüglich Parameter 1 als auch bezüglich Parameter 2 innerhalb deren jeweiliger oberen und unteren Kontrollgrenzen liegt.

Wie bereits erwähnt gliedert sich die Verwendung eines RCE-Netzes in zwei Phasen: "Trainingsphase" und "Recallphase". In der "Trainingsphase" werden dem Netz Trainingsvektoren präsentiert, anhand derer der Merkmalsraum in verschiedene Klassen eingeteilt wird. Hat man es mit einer sehr stabil arbeitenden Bearbeitungsanlage zu tun, so können die aus den Meßgrößen eines stabilen Testlauf der Bearbeitungsanlage erzeugten Maßzahlen als Trainingsvektoren (Prototypen) für einen "normalen" Zustand der Bearbeitungsanlage verwendet werden.

Leider arbeiten Bearbeitungsanlagen jedoch nicht hinreichend stabil, so daß es während eines Trainings- oder Testlaufs immer wieder zu ungewünschten bzw. "anormalen" Zuständen der Beabeitungsanlage kommen kann. Falls sich in den Trainingsbeispielen Vektoren befinden, die als "anormal" bewertet werden sollen, werden diese in einer später folgenden Recall-Phase fälschlicherweise als normal erkannt, da sie als dem Netz als normal trainiert wurden. Zur Vorbereitung des Trainings des Neuronalen Netzes müssen daher die vorliegenden Trainingsvektoren genau analysiert werden. Aus allen vorhandenen Trainingsvektoren müssen diejenigen herausgefiltert und vom Training ausgeschlossen werden, die als "anormal" angesehen werden müssen. Das Netz wird bevorzugt so trainiert, daß einerseits alle anormalen Abweichungen, andererseits aber auch alle normalen Zustände der Bearbeitungsanlage erkannt werden. Die Zahl der Fehlmeldungen sollte bei möglichst hoher Fehlererkennungsrate natürlich so gering wie möglich sein.

Erfindungsgemäß wird daher ein Verfahren zur automatischen Erkennung von "anormalen" Zuständen bereitgestellt, das ??.

Dazu wird eine wählbare Anzahl von Inputvektoren bereitgestellt. Die Inputvektoren können sich beispielsweise aus einem oder mehreren Testläufen einer später zu überwachenden Bearbeitungsanlage ergeben. Dann wird mittels eines geeignet gewählten Distanzmaßes die Distanz von jedem Vektor zu jedem anderen Vektor ermittelt, so daß bevorzugt eine symmetrische Distanzmatrix entsteht, deren Hauptdiagonalelemente alle gleich Null sind. Als Distanzmaß kann beispielsweise die euklidische Distanz zweier Vektoren verwendet werden.

Die Entscheidung, ob ein anormaler Zustand vorliegt, wird aufgrund der Verteilung dieser Distanzen getroffen. Es ergeben sich sowohl für die Vektoren, die normalen Zuständen entsprechen, als auch für die Vektoren, die anormalen Zuständen entsprechen, typische Distanzverteilungen. Ein Vektor, der einem normalen Zustand entspricht, weist in seiner Nachbarschaft viele weitere Vektoren auf. Dementsprechend treten in einer auf einen solchen Vektor bezogenen Distanzverteilung viele "kleine" Distanzen auf. Die Distanzverteilung eines solchen Vektors besitzt daher ihren Schwerpunkt bei "kleinen" Werten.

Ein Vektor, der einem anormalen Zustand entspricht, weist in seiner Nachbarschaft nur wenige weitere Vektoren auf. Dementsprechend treten in einer auf einen solchen Vektor bezogenen Distanzverteilung viele "große" Distanzen auf. Die Distanzverteilung eines solchen Vektors besitzt daher ihren Schwerpunkt bei "großen" Werten.

Zur Berechnung der Distanzverteilung wird beispielsweise jede Spalte der Distanzmatrix aufsteigend sortiert. Die geordnete Folge der Distanzen wird für jeden Vektor in ein eigenes Koordinatensystem eingetragen. Dabei entsteht für je einen Vektor eine Distanzverteilung bzw. eine kumulierte Distanzverteilung.

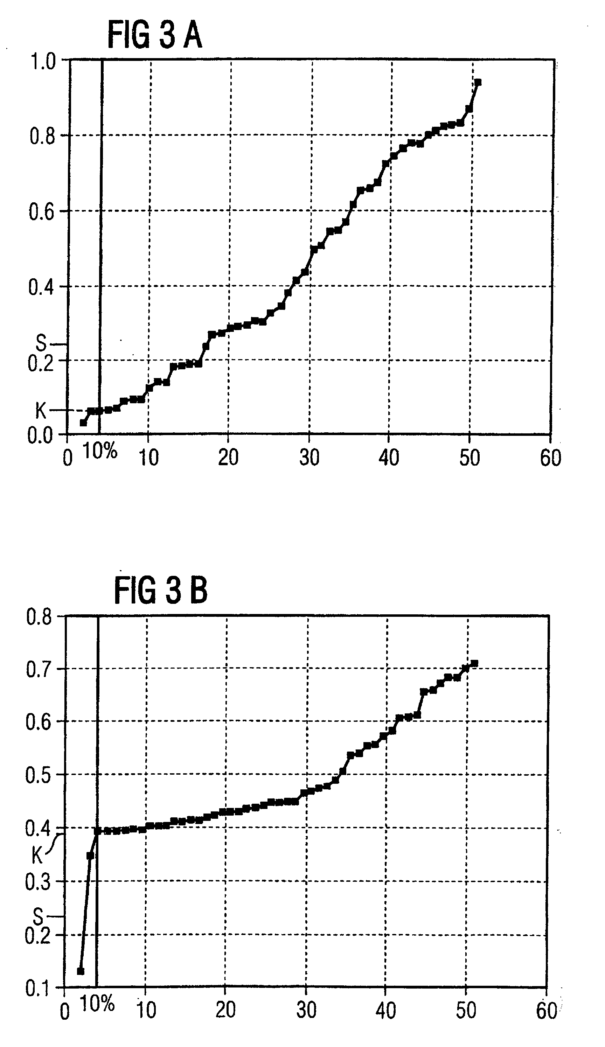

Zum Vergleich der Distanzverteilungen wird der Wert der geordneten Folge (Kennwert der Verteilung) verwendet werden, wenn ein wählbarer Prozentsatz aller Vektoren (beispielsweise 10% aller Vektoren) innerhalb des gerade vorliegenden Abstandswerts angeordnet sind. Bevorzugt entspricht dieser frei wählbare Prozentsatz dem prozentualen Anteil der in den Trainingsvektoren vorkommenden "anormalen" Vektoren. Übersteigt dieser Kennwert K der Distanzverteilung einen bestimmte Schwelle, so handelt es beim entsprechenden Vektor um einen Vektor, der einem anormalen Zustand entspricht. Bleibt der Kennwert K der Distanzverteilung unterhalb des Schwellwerts, so handelt es beim entsprechenden Vektor um einen Vektor, der einem normalen Zustand entspricht. Die Figuren 3a und 3b zeigen Distanzplots für einen normalen Zustand (Fig. 3a) und einen anormalen Zustand (Fig. 3b). Man erkennt, daß der Kennwert K im Fall des normalen Zustands deutlich kleiner ist als der Kennwert K im Fall des anormalen Zustands. Im Fall des normalen Zustands liegt der Kennwert K unterhalb des Schwellwerts S und im Fall des anormalen Zustands liegt der Kennwert K oberhalb des Schwellwerts S.

Um herauszufinden, wieviele anormale Vektoren in den Daten vorhanden sind, kann man die Verteilungsfunktion der Kennwerte heranziehen.

Manche der Maßzahlen, die als Komponenten der Inputvektoren für einen Klassifikator dienen, besitzen Verteilungen, die mehrere deutlich getrennte Verteilungsmaxima besitzen. Dies kann bei der Suche nach anormalen Vektoren zu Fehleinschätzungen führen. Daher ist es bevorzugt, wenn als Distanzmaße zur Ermittlung der Distanz von jedem Vektor zu jedem anderen Vektor, gewichtete Distanzmaße verwendet werden. Besonders bevorzugt ist es, wenn die Distanzmaße gemäß dem Informationsgehalt/Entropie (oder einer Funktion des Informationsgehalts/Entropie) der jeweiligen Maßzahl gewichtet werden. Die Entropie der Verteilung einer Maßzahl läßt sich wie folgt berechnen:

$$S^i = k\, \Sigma_j\, p^i_j\, \ln(p^i_j),$$

wobei $p^i_j$ die Wahrscheinlichkeit angibt, daß die i-te Maßzahl den j-ten Wert annimmt, und k eine wählbare Konstante ist. Als gewichtetes Distanzmaß zweier Vektoren erhält somit beispielsweise

$$d(x, y) = (\Sigma_i\, (x^i - y^i)^q)^{1/q}$$

bzw.

$$d(x, y) = (\Sigma_i\, f(S^i)\, (x^i - y^i)^q)^{1/q},$$

wobei f(S) eine geeignet gewählte Funktion der Entropie ist. Durch die Berücksichtigung der Entropie der Maßzahlverteilung ist auch angemessene Behandlung multimodaler Daten gesichert.

## Patentansprüche

1. Verfahren zur Überwachung und/oder Steuerung von Bearbeitungsanlagen, welche zeitabhängige Bearbeitungsparameter aufweisen, mit den Schritten:

    a) gewünschte zeitabhängige Bearbeitungsparameter werden als Meßkurve gemessen,
    b) aus den gemessenen Bearbeitungsparametern werden zeitunabhängige Maßzahlen (10, 11) erzeugt, und
    c) die zeitunabhängigen Maßzahlen (10, 11) werden in einen Klassifikator (1 bis 7) eingegeben, der zwischen normalen Zuständen (10) der Bearbeitungsanlage und anormalen Zuständen (11) der Bearbeitungsanlage unterscheidet,

    **dadurch gekennzeichnet, daß**
der Klassifikator mit Trainingsvektoren, deren Komponenten zeitunabhängige Maßzahlen sind, trainiert wird, und
zur Vorbereitung des Trainings des Klassifikators aus den vorhandenen Trainingsvektoren diejenigen herausgefiltert werden, die als "anormal" angesehen werden,
wobei zur Filterung der anormalen Trainingsvektoren die Distanz von jedem Trainingsvektor zu jedem anderen Trainingsvektor mittels eines geeignet gewählten Distanzmaßes ermittelt wird,
und wobei die Entscheidung anhand der Verteilung dieser Distanzen getroffen wird.

2. Verfahren nach Anspruch 1, **dadurch gekennzeichnet, daß** als Klassifikator ein Neuronales Netz verwendet wird.

3. Verfahren nach Anspruch 2, **dadurch gekennzeichnet, daß** ein RCE-Netz mit verwendet wird.

**4.** Verfahren nach Anspruch 3, **dadurch gekennzeichnet, daß** als Domäne um einen Prototypen ein Hyperquader oder eine Hypersphäre mit dem Radius $\lambda_j$ verwendet wird.

**5.** Verfahren nach einem der Ansprüche 1 bis 4, **dadurch gekennzeichnet, daß** die zeitunabhängigen Maßzahlen die Forderungen der "Universalität", "Ähnlichkeitstreue", "Robustheit" und "Normierung" erfüllen.

**6.** Verfahren nach Anspruch 5, **dadurch gekennzeichnet, daß** zeitabhängige Meßkurven eines gewünschten Bearbeitungsparameters durch eine Linearkombination von Polynomen, bevorzugt orthogonale Polynome, approximiert und die Koeffizenten $c_i$ der Linearkombination als zeitunabhängige Maßzahlen verwendet werden.

**7.** Verfahren nach Anspruch 5, **dadurch gekennzeichnet, daß** als Maßzahlen Distanzen der Meßkurve zu vorgegebenen Vergleichkurven verwendet werden.

**8.** Verfahren nach Anspruch 5, **dadurch gekennzeichnet, daß** aus den Meßkurven eines Bearbeitungsparameters eine mittlere Meßkurve berechnet wird und als Maßzahlen Abweichungen zu dieser mittleren Meßkurve verwendet werden.

**9.** Verfahren nach Anspruch 5, **dadurch gekennzeichnet, daß** Kenngrößen zur Charakterisierung der als Bitmaps aufgefaßten Meßkurven als Maßzahlen verwendet werden.

**10.** Verfahren nach Anspruch 5, **dadurch gekennzeichnet, daß** die Meßkurve in Abschnitte unterteilt wird und in die diesen Abschnitten berechneten Mittelwerte und/oder Standardabweichungen als Maßzahlen verwendet werden.

**11.** Verfahren nach einem der vorhergehenden Ansprüche, **dadurch gekennzeichnet, daß** diejenigen Trainingsvektoren herausgefiltert werden, bei denen ein Distanzwert (K) der geordneten Folge der Distanzen, bei dem ein vorgegebener Prozentsatz aller Vektoren kleinere Distanzen zu dem gerade vorliegenden Trainingsvektor aufweisen, einen vorgegebenen Schwellwert (S) übersteigt.

**12.** Verfahren nach einem der vorhergehenden Ansprüche, **dadurch gekennzeichnet, daß** als Distanzmaße zur Ermittlung der Distanz von jedem Trainingsvektor zu jedem anderen Trainingsvektor, gewichtete Distanzmaße verwendet werden.

**13.** Verfahren nach Anspruch 12, **dadurch gekennzeichnet, daß** die Distanzmaße gemäß dem Informationsgehalt/Entropie oder einer Funktion des Informationsgehalts/Entropie der jeweiligen Maßzahl gewichtet werden.

**14.** Verfahren zur Filterung von Vektoren, die als anormal angesehen werden, aus einer Menge von Vektoren, bei dem sich aus einem oder mehreren Testläufen einer später zu überwachenden Bearbeitungsanlage Vektoren ergeben, **dadurch gekennzeichnet, daß** die Distanz von jedem Vektor zu jedem anderen Vektor mittels eines geeignet gewählten Distanzmaßes ermittelt wird und diejenigen Vektoren herausgefiltert werden, bei denen ein Distanzwert (K) der geordneten Folge der Distanzen, bei dem ein vorgegebener Prozentsatz aller Vektoren kleinere Distanzen zu dem gerade vorliegenden Vektor aufweisen, einen vorgegebenen Schwellwert (S) übersteigt.

**15.** Verfahren nach Anspruch 14, **dadurch gekennzeichnet, daß** als Distanzmaße zur Ermittlung der Distanz von jedem Vektor zu jedem anderen Vektor, gewichtete Distanzmaße verwendet werden.

**16.** Verfahren nach Anspruch 15, **dadurch gekennzeichnet, daß** die Distanzmaße gemäß dem Informationsgehalt/Entropie oder einer Funktion des Informationsgehalts/Entropie der jeweiligen Vektorkomponenten gewichtet werden.

**Claims**

**1.** Method of monitoring and/or controlling machining plants which have time-dependent machining parameters, with the following steps:

    a) desired time-dependent machining parameters are measured as a measured curve,
    b) time-independent numerical values (10,11) are generated from the measured machining parameters, and
    c) the time-independent numerical values (10,11) are entered into a classifier (1 to 7), which distinguishes between normal states (10) of the machining plant and abnormal states (11) of the machining plant,

**characterized in that**
the classifier is trained with training vectors of which the components are time-independent numerical values, and,
to prepare for the training of the classifier, those training vectors which are regarded as "abnormal" are filtered out from the training vectors available, the distance of each training vector from every other training vector being determined by means of a suitably selected measure of distance for the filtering of the abnormal training vectors,
and the decision being made on the basis of the distribution of these distances.

2. Method according to Claim 1, **characterized in that** a neural network is used as the classifier.

3. Method according to Claim 2, **characterized in that** an RCE network is also used.

4. Method according to Claim 3, **characterized in that** a hypersquare or a hypersphere with the radius $\lambda_j$ is used as the domain around a prototype.

5. Method according to one of Claims 1 to 4, **characterized in that** the time-independent numerical values satisfy the requirements of "universality", "similitude", "robustness" and "normalization".

6. Method according to Claim 5, **characterized in that** time-dependent measured curves of a desired machining parameter are approximated by a linear combination of polynomials, preferably orthogonal polynomials, and the coefficients $c_i$ of the linear combination are used as time-dependent numerical values.

7. Method according to Claim 5, **characterized in that** distances of the measured curve with respect to prescribed comparison curves are used as numerical values.

8. Method according to Claim 5, **characterized in that** an average measured curve is calculated from the measured curves of a machining parameter and deviations with respect to this average measured curve are used as numerical values.

9. Method according to Claim 5, **characterized in that** characteristic variables for characterizing the measured curves conceived as bit maps are used as numerical values.

10. Method according to Claim 5, **characterized in that** the measured curve is subdivided into portions and in [sic] the mean values and/or standard deviations calculated lacuna these portions are used as numerical values.

11. Method according to one of the preceding claims , **characterized in that** those training vectors for which a distance value (K) of the ordered sequence of distances in which a prescribed percentage of all the vectors have smaller distances from the training vector in question exceeds a prescribed threshold value (S) are filtered out.

12. Method according to one of the preceding claims, **characterized in that** weighted measures of distance are used as measures of distance for determining the distance of each training vector from every other training vector.

13. Method according to Claim 12, **characterized in that** the measures of distance are weighted according to the information content/entropy or a function of the information content/entropy of the respective numerical value.

14. Method of filtering vectors which are regarded as abnormal from a set of vectors,
in which vectors result from one or more test runs of a machining plant to be monitored subsequently, **characterized in that**
the distance of each vector from every other vector is determined by means of a suitably selected measure of distance and those vectors for which a distance value (K) of the ordered sequence of distances in which a prescribed percentage of all the vectors have smaller distances from the vector in question exceeds a prescribed threshold value (S) are filtered out.

15. Method according to Claim 14, **characterized in that** weighted measures of distance are used as measures of distance for determining the distance of each vector from every other vector.

16. Method according to Claim 15, **characterized in that** the measures of distance are weighted according to the information content/entropy or a function of the information content/entropy of the respective vector components.

## Revendications

1. Procédé pour surveiller ou commander des installations de traitement qui présentent des paramètres de traitement liés au temps avec les étapes suivantes :

   a) les paramètres souhaités de traitement liés au temps sont mesurés en tant que courbe de mesures,
   b) on produit des nombres de mesure (10, 11) indépendants du temps à partir des paramètres de traitement mesurés et
   c) les nombres de mesure (10, 11) indépendants du temps sont entrés dans un classificateur (1 à 7) qui distingue entre les états normaux de l'installation de traitement et les états anormaux de l'installation de traitement,

**caractérisé en ce que** le classificateur est soumis à un apprentissage avec des vecteurs d'apprentissage dont les composantes sont des nombres de mesure indépendants du temps et

pour préparer l'apprentissage du classificateur à partir des vecteurs d'apprentissage existants on filtre ceux qui sont considérés comme " anormaux ", la distance de chaque vecteur d'apprentissage à chaque autre vecteur d'apprentissage étant déterminée à l'aide d'une grandeur de distance sélectionnée de manière adaptée afin de filtrer les vecteurs d'apprentissage anormaux,

et la décision étant réalisée à l'aide d'une répartition de ces distances.

2. Procédé selon la revendication 1, **caractérisé en ce que** l'on utilise en tant que classificateur un réseau neuronal.

3. Procédé selon la revendication 2, **caractérisé en ce que** l'on utilise un réseau RCE.

4. Procédé selon la revendication 3, **caractérisé en ce que** l'on utilise un hyperparallélépipède ou une hypersphère d'un rayon $\lambda_j$ en tant que domaine autour d'un prototype.

5. Procédé selon l'une des revendications 1 à 4, **caractérisé en ce que** les nombres de mesure indépendants du temps satisfont aux exigences d'" universalité ", de "fiabilité de similitude ", de " robustesse " et de " cadrage ".

6. Procédé selon la revendication 5, **caractérisé en ce que** l'on s'approche par approximation des courbes de mesures liées au temps d'un paramètre de traitement souhaité par la combinaison linéaire de polynômes, de préférence de polynômes orthogonaux, et que l'on utilise les coefficients $c_i$ de la combinaison linéaire en tant que nombres de mesure indépendants du temps.

7. Procédé selon la revendication 5, **caractérisé en ce que** l'on utilise en tant que nombres de mesure les distances de la courbe de mesure à des courbes de comparaison prédéfinies.

8. Procédé selon la revendication 5, **caractérisé en ce que** l'on calcule une courbe de mesures moyenne à partir des courbes de mesurés d'un paramètre de traitement et qu'on utilise les écarts par rapport à cette courbe de mesures moyenne en tant que nombres de mesure.

9. Procédé selon la revendication 5, **caractérisé en ce que** des grandeurs caractéristiques destinées à caractériser les courbes de mesures enregistrées en tant que matrices sont utilisées en tant que nombres de mesure.

10. Procédé selon la revendication 5, **caractérisé en ce que** la courbe de mesures est divisée en segments et qu'on utilise en tant que nombres de mesure des écarts type et/ou les valeurs moyennes calculées dans ces segments.

11. Procédé selon l'une des revendications précédentes **caractérisé en ce que** l'on filtre les vecteurs d'apprentissage pour lesquels une valeur de distance (K) de la suite ordonnée des distances, pour laquelle un pourcentage prédéfini de tous les vecteurs présente des distances plus petites au vecteur d'apprentissage qui existe à ce moment, dépasse une valeur seuil (S) prédéfinie.

12. Procédé selon l'une des revendications précédentes **caractérisé en ce que** l'on utilise des grandeurs de distance pondérées en tant que grandeurs de distance afin de déterminer la distance de chaque vecteur d'apprentissage à chaque autre vecteur d'apprentissage.

13. Procédé selon la revendication 12, **caractérisé en ce que** l'on pondère les mesures de distance selon le contenu d'information / l'entropie ou selon une fonction du contenu d'information / de l'entropie du nombre de mesure concernée.

14. Procédé pour filtrer des vecteurs qui sont considérés comme anormaux parmi une quantité de vecteurs,

pour lequel on obtient des vecteurs à partir d'un ou de plusieurs fonctionnements d'essai d'une installation de traitement à surveiller ultérieurement, **caractérisé en ce que**

la distance de chaque vecteur à chaque autre vecteur est déterminée au moyen d'une grandeur de distance sélectionnée de manière adaptée et qu'on filtre les vecteurs pour lesquels une valeur de distance (K) de la suite ordonnée des distances, pour laquelle un pourcentage prédéfini de tous les vecteurs présente des distances plus petites au vecteur qui est justement présent, dépasse une valeur seuil (S) prédéfinie.

15. Procédé selon la revendication 14, **caractérisé en ce que** l'on utilise des grandeurs de distance pondérées en tant que grandeurs de distance afin de déterminer la distance de chaque vecteur à chaque autre vecteur.

16. Procédé selon la revendication 15, **caractérisé en ce que** les grandeurs de distance sont pondérées selon le contenu d'information / l'entropie ou selon une fonction du contenu d'information / de l'entropie des composantes de vecteur concernées.

## FIG 1

5    5    5

1

2

6    6    6    6    6    6    6    6

7    7    7

3

## FIG 2

OKL P1

10    11

10

10

10

10    10

UKL P1
UKL P2 ← → OKL P2

## FIG 3 A

## FIG 3 B